# EUROPEAN PATENT APPLICATION

(11) **EP 2 216 922 A1**
(43) Date of publication of application: **11.08.2010**
(21) Application number: 09100175.0
(22) Date of filing: 11.03.2009
(51) Int. Cl.: H04J 3/16

(54) **High speed interleave and de-interleave method and apparatus in EOS**

(30) Priority: 06.02.2009 CN 200910003840
(71) Applicant: Nokia Siemens Networks Oy, 02610 Espoo (FI)
(72) Inventor: Feng, Ying Zhen, Shanghai / China (CN)

(57) **Abstract**

The present invention relates to a high speed interleave and de-interleave method and apparatus in EOS. Said high speed interleave method comprises: reading in sequence from the external memory the VCG data that are from the Ethernet and are waiting to be interleaved; performing a member aggregation operation for each VCG data that has been read, and storing the member-aggregated VCG data into the member aggregation memory; performing an interleave on the VCG data from the member aggregation memory, and storing the interleaved VCG data into the interleave memory; and forming a SDH frame to be sent to the SDH after all the VCG data have been interleaved. The high speed de-interleave method comprises: performing a first-stage de-interleave for the SDH frame to separate the members of each VCG from each other and to store the separated members into the external memory; reading each of the members of the VCG in sequence from the external memory, performing a second-stage de-interleave to recover the VCG, and storing the recovered VCG data into a de-interleave memory so as to be sent to the Ethernet port.

## Description

### Technical field

The present invention generally relates to the Ethernet over a Synchronous Digital Hierarchy (EOS), more particularly to interleave and de-interleave in EOS.

### Background art

EOS is an abbreviation for Ethernet over SDH, which means transferring Ethernet's data over SDH. One side of the transmission is the Ethernet port, and the other side is the optical network.

10G SDH(VC-4-64c) has 64 VC4s. The VC4 can consist of just 1 VC4, or of smaller units, such as 3 VC3s , or 63 VC12s and so on. In the following description, only VC4 is used to illustrate the invention, however the invention applies to all situations.

A VC4 is numbered according to its position in the SDH, that is VC4#0, VC4#1, ..., VC4#62 and VC4#63. All of the numbering starts with zero in this description.

An SDH frame consists of 9 rows, for each row, each VC4 has a payload of 260 bytes. All members form the SDH frame in the way of one-byte interleaving, that is, the 0th byte belongs to VC4#0, the 1st byte belongs to VC4#1, the 63rd byte belongs to VC4#63, the 64th byte belongs to VC4#0, ..., and so on.

VCG is the abbreviation for Virtual Concatenation Group, physically it can be considered to correspond to an Ethernet port. There are usually many VCGs in a design. In the following descriptions, only 64 VCGs are used as an example to illustrate the present invention, but the present invention can be implemented in all cases. A VCG of type VC4 has 64 members (i.e. 64 VC4s) at most. For each VCG, its members are identified by their SDH numbering. Inside the VCG, these members are also arranged in the way of one-byte interleaving. For example, VCG2 is type VC4, it has two members VC4#2 and VC4#4 in sequence, then in the VCG2 data block, the 0th byte belongs to VC4#2, the 1st byte belongs to VC4#4, the 2nd byte belongs to VC4#2, ..., and so on.

The total bandwidth of all members of all VCGs is no more than 10G.

Table 1 is a summary of the above descriptions.

**Table 1: VCG type, member and member's numbering**

| VCG type | Number of members (N) | Payload bytes for a VCG row | Example for member numbering |
|---|---|---|---|
| VC4 | 0-64 | 260*N | VC4#1, VC4#3, ... |

The clock in the 10G EOS design of the present invention runs at 155.52MHz and the width of the internal data bus is 8 bytes. Each clock should process 8-byte data so as to achieve 10G bps throughput. The direction from Ethernet to SDH is named Egress, where data from all members of the 64 VCGs will be byte-interleaved into a SDH frame and then be sent out through an optical network. The direction from SDH to Ethernet is named Ingress, where data from the optical network are de-interleaved to recover each VCG, and then the recovered VCG data are sent out through the corresponding Ethernet port.

For the Ingress, a VCG is recovered though a two-stage de-interleave.

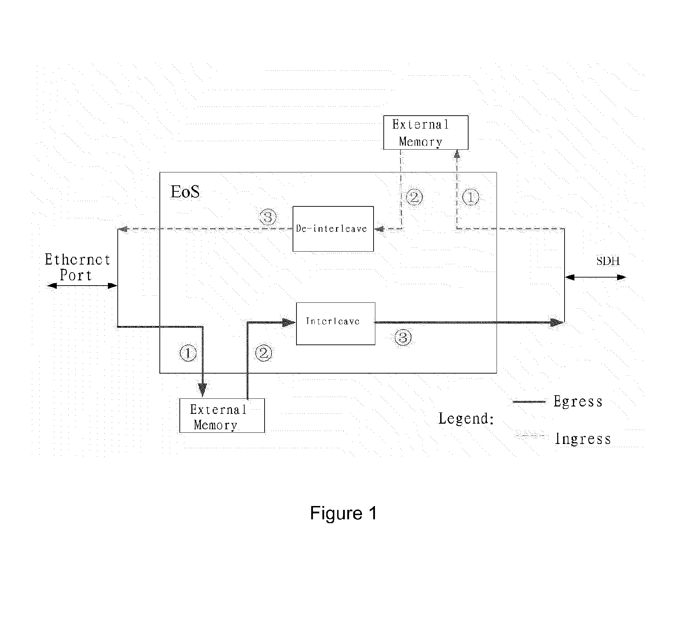

Refer to Figure 1. the dashed arrow stands for the ingress.
① Run the first-stage de-interleave on SDH data to separate the member of each VCG from each other and store them into an external memory.
② Read each member of a VCG in sequence from the external memory, run the second-stage de-interleave to recover the VCG. The intermediate data are stored into an internal memory.
③ Read the de-interleaved data from the internal memory, perform necessary process and then send the data to the corresponding Ethernet port.

The first-stage de-interleave serves for the purpose of member alignment. Assuming that a VCG has 5 members: VC4#3, VC4#7, VC4#11, VC4#33 and VC4#50 in sequence. In brief, they may arrive at the EOS chip at different time. Subsequent process can not proceed before they all come, so early ones must be temporarily saved to wait for late ones. This is called alignment. For the requirement of tolerating an arrival time difference of at least 64ms, a memory of 256M bits is needed. An external memory is used here because on-chip internal memory has a small capacity. So far, the first-stage de-interleave has been solved well.

In the second-stage de-interleave, a VCG is recovered from all its' members. Assuming that the VCG has 5 members: VC4#3, VC4#7, VC4#11, VC4#33 and VC4#50 in sequence. Table 2 below shows their arrangement in the external memory and table 3 shows the recovered VCG data block. The task of the second-stage de-interleave is to rearrange these data from table 2 into table 3 to get the recovered VCG data block.

For each table cell, B stands for byte and the following number stands for byte numbering. The number following VC4 stands for the VC4 numbering. For example,

| |
|---|
| B0 VC4#3 |

represents the byte 0 of the 3rd VC4.

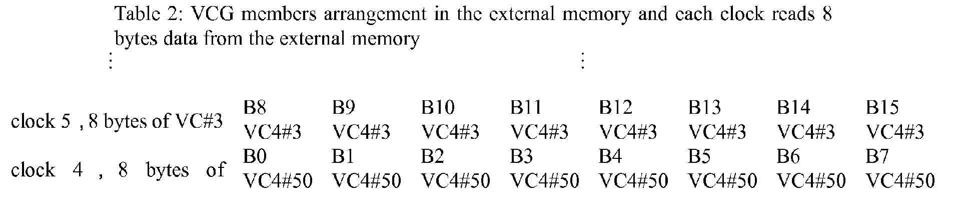

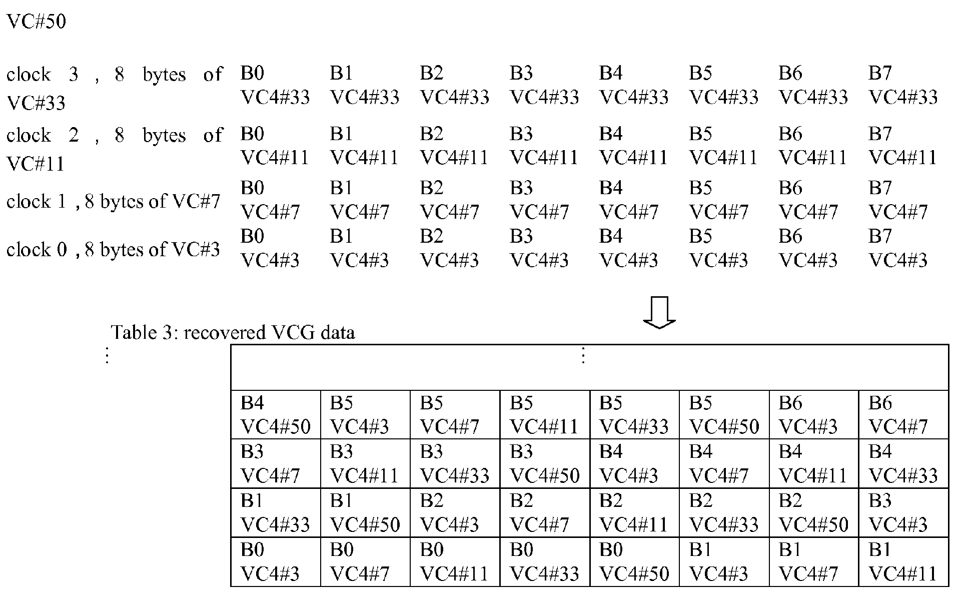

Table 3 is implemented using an internal memory. Whether an external memory or an internal memory is used depends on the size of data to be stored. De-interleave and interleave need to store small size data, so an internal memory is enough.

Each clock reads 8 bytes data from the external memory, and their rearrangement needs to be completed in one clock to achieve 10Gbps throughout.

There are fixed rules for the write-read operation of a memory. Take the dual-port RAM with 4 bytes data width as an example, it has two ports, one is for the write operation, and the other is for the read operation, so the read operation and write operation can proceed simultaneously. However, for each port there is at most one write or read operation each clock, and data size of write and read can not exceed the memory data width, which is 4 bytes herein. Moreover, the data that are read or written must be located between address 4K to 4K+3 for each read and write operation, wherein K is a natural number.

Take the 8 bytes of VC#3 at clock 0 as an example. In the external memory, they are located at continuous addresses from 8K to 8K+7, assuming that k = 0, then the addresses are 0,1, 2, 3,4, 5, 6 and 7, so they can be read out in one clock. However, in the recovered VCG data, their addresses are not adjacent, it can be seen from table 3 that they are 0, 5, 10, 15, 20, 25, 30 and 35. In general, these addresses are M, M+N, M+2N, M+3N, M+4N, M+5N, M+6N and M+7N, which depend on two factors, i.e. the VCG member number and member sequence number, denoted as N and M respectively. Here N is 5 and M is 0. If a single memory is used, the data line thereof must have a width of 36 bytes so that the 8 bytes can be written in one clock. In fact, there is no memory that has such a great data width. Furthermore, N is a variable, its maximum is 64. Thus there comes the problem as to how to distribute 8 bytes to their inconsecutive locations in just one clock and at the same time make both the memory resource least occupied and the design least complicated.

For the Egress, data from VCGs are byte-interleaved into an SDH frame and sent to the SDH network.

Refer to Figure 1, the hold solid arrow stands for the Egress.
① Due to the large amount of data, Ethernet data of VCGs are firstly stored into the external memory.
② Take each VCG's data from the external memory in sequence, run the interleaving and store the intermediate data into the internal memory.
③ After interleaving of all VCGs, read the interleaved data from the internal memory, perform necessary process and then send the data to SDH.

Assuming that a VCG has six members, which are VC4#3, VC4#7, VC4#11,VC4#33, VC4#50 and VC4#57 in sequence, then their arrangement in this VCG data block is as shown in the following Table 4.

An SDH frame consists of 9 rows, for each row, each VC4 has a payload of 260 bytes. Table 5 aims to illustrate a SDH frame and just shows payload byte 0 as an example.

Egress interleave should place a VCG's data into the SDH frame according to their positions. After interleaving all VCGs, a whole SDH frame is generated.
Table 4: data arrangement for a VCG with 6 members, each clock reads 8 bytes data from the external memory

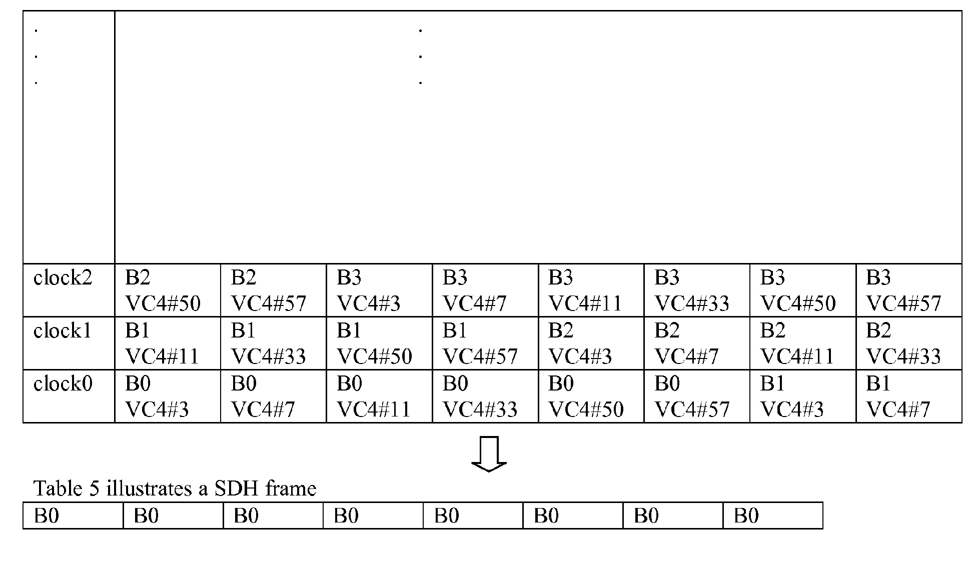

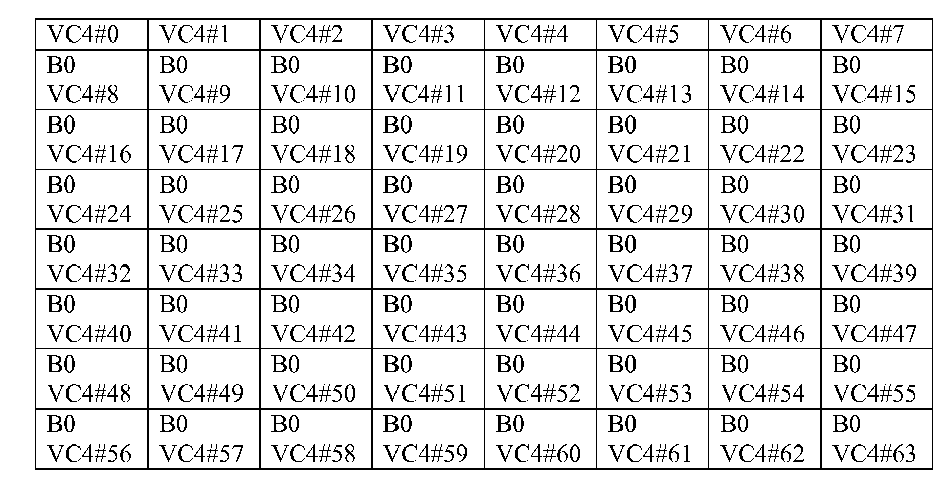

Table 5 is implemented using an internal memory.

Each clock reads 8 bytes data from the external memory, and the interleaving of the 8 bytes needs to be completed in one clock to achieve 10Gbps throughout. Take the 8 bytes at clock 0 as an example, these 8 bytes are byte 0 of VC4#3, VC4#7, Vac4#11, VC4#33, VC4#50, VC4#57 and byte 1 of VC4#3, VC4#7. As similar in the ingress, in the external memory, these bytes are located at continuous addresses from 8K to 8K+7, assuming that k = 0, then the addresses are 0,1, 2, 3,4, 5, 6 and 7, so they can be read out in one clock. However, in the SDH frame, their addresses are not adjacent. It can be seen from table 5 that they are 3, 7, 11, 33, 50, 57, 67 and 71. In general, it is M+64*B, where M denotes the member sequence and B denotes the byte sequence, for example, for byte 1 of VC4#7, M is 7 and B is 1, so its address is 71.

Thus the same problem as in the Ingress exists in the Egress, that is, how to distribute 8 bytes to their inconsecutive locations in just one clock and at the same time make both the memory resource least occupied and the design least complicated.

To solve this problem, a memory with the data width of 64*8 bytes can be used, but this solution is inefficient, because there is no single memory that has such a great data width and thus a lot of memories are required to construct such a memory. In addition, the speed of the internal logic of a FPGA can be increased to 1.25G so as to reduce the internal data bus width to 1 byte, but this solution cannot be implemented with the existing techniques.

### Summary of the invention

The soul of the invention is how to distribute 8 bytes to 8 memory blocks. The invention designs the interleave and de-interleave from the viewpoint of a matrix (column address and row address) and provides a solution to address collision.

In one embodiment of the invention, a high speed interleave method for use in EOS is provided. The high speed interleave method comprises: reading in sequence from the external memory the VCG data that are from the Ethernet and are waiting to be interleaved; performing a member aggregation operation for each VCG data that has been read, and storing the member-aggregated VCG data into the member aggregation memory; performing an interleave on the VCG data from the member aggregation memory, and storing the interleaved VCG data into the interleave memory; and forming a SDH frame to be sent to the SDH after all the VCG data have been interleaved.

In another embodiment of the invention, a high speed de-interleave method for use in EOS is provided. The high speed de-interleave method comprises: performing a first-stage de-interleave for the SDH frame to separate the members of each VCG from each other and to store the separated members into the external memory; reading each of the members of the VCG in sequence from the external memory, performing a second-stage de-interleave to recover the VCG, and storing the recovered VCG data into a de-interleave memory so as to be sent to the Ethernet port.

In the present invention, the address of each byte is divided into a column address and a row address. The low 3 bits are column addresses, and the high bits are row addresses. The column address determines into which memory column this byte is written and the row address determines into which location of the selected memory column this byte is written. When the number of the members of the VCG is odd, the column addresses of the bytes are not overlapped with each other, when the number of the members of the VCG is even, the column addresses of the bytes are overlapped.

The VCG data are aggregated according to the members thereof, and when the column addresses of the bytes are overlapped, the column addresses or the indexes of the bytes are revised so as to make the 8 bytes belonging to the same member to be arranged in the same row. The revision of the column addresses or the indexes of the bytes is performed by shifting the column address right or by shifting the byte index left according to the times of overlapping of addresses.

The first-stage de-interleave is performed for member alignment. In the case where the column addresses overlap, the second-stage de-interleave revises the column addresses or the indexes of the bytes to make only one byte correspond to one memory column.

In yet another embodiment of the invention, a high speed interleave apparatus for use in EOS is provided. The high speed interleave apparatus comprises: a member aggregation memory for storing the VCG data that are aggregated according to the members; and an interleave memory that is coupled to the downstream of the member aggregation memory and is used for storing the VCG data obtained by interleaving the VCG data read from the member aggregation memory. Both the member aggregation memory and the interleave memory consist of 8 memory columns, each having a write port and a read port.

In still another embodiment of the invention, a high speed de-interleave apparatus for use in EOS is provided. The high speed de-interleave apparatus comprises: a de-interleave memory for storing the recovered VCG data. The de-interleave memory consists of 8 memory columns, each memory column having a write port and a read port.

The solution of the present invention adopts 8 separated memory columns, and it reduces the memory consumption to the minimum together with the solution to address collision. In this solution, the generation of the write address and the read address is very regular so that the design is easier to be implemented.

### Description of the drawings

The invention will be understood by referring to the following descriptions taken in conjunction with the accompanying drawing, wherein the same reference numerals indicate the same elements, and wherein
Figure 1 shows the data flow to illustrate the problem in the prior art;
Figure 2 shows the de-interleave memory matrix;
Figure 3 shows the member aggregation and interleave memory matrix;
Figure 4 shows the generation of Col2_Byte_Index at the write side of de-interleave memory column;
Figure 5 shows the generation of Col2_Byte at the write side of de-interleave memory column;
Figure 6 shows the generation of Byte2_Row_Addr at the write side of de-interleave memory column;
Figure 7 shows the generation of Col2_Row_Addr at the write side of de-interleave memory column;
Figure 8 shows the generation of Byte2_Col_Addr at the read side of de-interleave memory column;
Figure 9 shows the generation of Byte2 at the read side of de-interleave memory column; and
Figure 10 shows the hardware block diagram and data flow of the embodiments according to the invention.

### Preferred embodiments

If a single memory is used, its data width should be very large, which is not practical. Let Mem_Num to represent the memory block number, then the issue is to distribute 8 bytes to Mem_Num memory blocks. If Mem_Num < 8, it means there are at least two bytes are to be distributed to one memory block. Take ingress de-interleave as an example, the 8 bytes' addresses are M, M+N, M+2N, M+3N, M+4N, M+5N, M+6N and M+7N, where N denotes VCG member number and M denotes member sequence number. The minimal distance among these 8 bytes is N. When N is 64, it means that the data port width should be 64 bytes wide, which is not practical either. If Mem_Num >= 8, one byte is to be distributed to one memory block, the address problem is solved. And it is best if Mem_Num = 8, because this means less memories are needed.

### Ingress

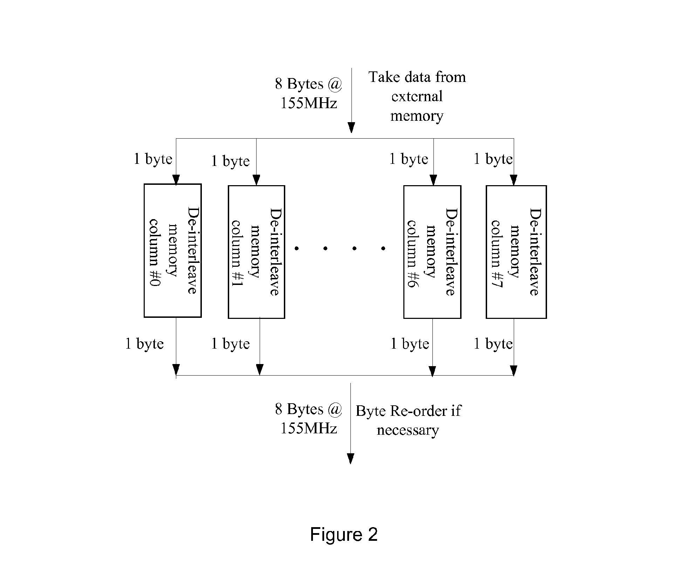

Figure 2 shows the de-interleave text block located between ② and ③ in ingress path in Figure 1.

The de-interleave memory consists of 8 columns of separated memory, each column has a write port and a read port, the port width is one byte. The rows consist of 8 locations in 8 memory columns respectively.

For each of the 8 bytes pending for de-interleave, its address in the recovered VCG data block is divided into column address and row address. The low 3 bits are column addresses, and the high bits are row addresses. The column address determines into which memory column this byte is written and the row address determines into which location of the selected memory column this byte is written. In mathematical statement, this is modulo 8 operation. The integral part is the row address, and the remainder is the column address. These column addresses are M%8 , (M+N)%8, (M+2N)%8, (M+3N)%8, (M+4N)%8, (M+5N)%8, (M+6N)%8 and (M+7N)%8. In this way, 8 bytes are distributed among 8 memory columns. Due to the property of modulo 8 operation, there are two cases: N is odd and N is even (M is the common part, so only N determines the results of the operations, the above column addresses can be simplified as 0%8 , N%8, 2N%8, 3N%8, 4N%8, 5N%8, 6N%8 and 7N%8 to see this better).

When N is odd, the generated column addresses are not overlapped with each other, that is only one byte corresponds to one memory column, so 8 bytes can be directly written into 8 memory columns in one clock. Take N = 5 as an example, refer to table 2 and table 3, assuming that columns are numbered from 0 to 7 from left to right, then for clock 0 , the 8 bytes of VC#3 are distributed to column 0, 5, 2, 7, 4, 1, 6 and 3, respectively.

When N is even, some generated column addresses are overlapped, that is, more than one byte correspond to one memory column, so they can not be written in one clock. For this case, the column address will be revised so that only one byte corresponds to one memory column. Since its position has changed, a byte reorder must be performed when data are read out, so that 8 bytes data export in a correct order. Column address revision and byte reorder will be depicted below in detail.

Thus for any case, 8 bytes read or write can be completed in one clock so as to guarantee the required throughput.

During read, the column address determines from which memory column the byte will be read and the row address determines from which location of this memory column the byte will be read.

### Column address revision and byte reorder

When N is odd, the 8 column addresses do not overlap; when N is even, they overlap. However, the overlap is regular. There are four cases in total as in table 6 below. For the purpose of simplicity, the low 3 bits of binary N are denoted as N[2:0], which is N%8 in fact.

**Table 6: when N is even,8 column addresses overlap**

| N[2:0] | | Byte 0 | Byte 1 | Byte 2 | Byte 3 | Byte 4 | Byte 5 | Byte 6 | Byte 7 |
|---|---|---|---|---|---|---|---|---|---|
| "000" Overlap 7 times | original | a | a | a | a | a | a | a | a |
| | revision | a | *a*+*1* | *a*+*2* | *a*+*3* | *a*+*4* | *a*+*5* | *a*+*6* | *a*+*7* |
| "010" Overlap 1 time | original | a | b | c | d | a | b | c | d |
| | revision | a | b | c | d | *a*+*1* | *b*+*1* | *c*+*1* | *d*+*1* |
| "100" Overlap 3 times | original | a | b | a | b | a | b | a | b |
| | revision | a | b | *a*+*1* | *b*+*1* | *a*+*2* | *b*+*2* | *a*+*3* | *b*+*3* |
| "110" Overlap 1 time | original | a | b | c | d | a | b | c | d |
| | revision | a | b | c | d | *a*+*1* | *b*+*1* | *c*+*1* | *d*+*1* |

In table 6, a, b, c, and d represent the column addresses.

When N[2:0] is "000", the column addresses overlap 7 times, that is, the column addresses of byte 0 to byte 7 are the same.

When N[2:0] is "010"and "110", column addresses overlap 1 time, that is, the column addresses of byte 4 to byte 7 are the same as the column addresses of byte 0 to byte 3 respectively.

When N[2:0] is "100", the column addresses overlap 3 times, that is, the column address of byte 6 and byte 7, byte 4 and byte 5, byte 2 and byte 3, byte 0 and byte 1 are the same respectively.

Revision is in italics in table 6. For the first overlap, the revised column address equals to the original column address plus 1, for the second overlap, the revised column address equals to the original column address plus 2, and this pattern is repeated. For example, when N[2:0] is "100", the column address overlaps three times, byte 2 and byte 3 are the first overlap, the column addresses are revised to be the original column address plus 1, i.e. a+1 and b+1. Byte 4 and byte 5 are the second overlap, column addresses are revised to be the original column address plus 2, i.e. a+2 and b+2. Byte 6 and byte 7 are the third overlap, column addresses are revised to be the original column address plus 3, i.e. a+3 and b+3. There are only 8 memory columns, so the result of the addition operation above needs a modulo 8 operation, which is hidden in table 6.

This revision is performed for all bytes. A row consists of 8 bytes. Since the row address keeps unchanged, this means column address reallocation only occurs among 8 bytes in a row and there will be no multiple bytes written to one location. The original column address plus 1 means that it shifts one column right from the true location, plus 2 means it shifts two columns right from the true location, and so on.

With respect to the recovered VCG data block after the revision:

When N[2:0] is "000", from row 0 to row N/8-1 all bytes keep at the true locations, from row N/8 to row 2*N/8-1, all bytes shift one column right, ..., from row 7*N/8 to row N-1, all bytes shift seven columns right. There are 7 times of shift in total corresponding to 7 times of revision in column address.

When N[2:0] is "010"and "110", from row 0 to row N/2-1 all bytes keep at the true locations, from row N/2 to row N-1 all bytes shift one column right. There is 1 time of shift in total corresponding to 1 time of revision in column address.

When N[2:0] is "100", from row 0 to row N/4-1 all bytes keep at the true locations, from row N/4 to row 2*N/4-1 all bytes shift one column right, from row 2*N/4 to row 3*N/4-1 all bytes shift two columns right, from row 3*N/4 to row N-1 all bytes shift three columns right, There are 3 times of shift in total corresponding to 3 times of revision in column address.

From the descriptions above, it is evident that to get the correct order is just to shift left. That is the byte reorder.

Example for column address revision and byte reorder:

Take N = 6 as an example. VCG has 6 members, for simplicity, it is assumed that they are A, B, C, D, E and F in sequence as in table 7. The number following member denotes byte numbering, e.g. A0 stands for byte 0 of member A.

Table 8 is the recovered VCG data block with true position. However, without column address revision, for each member, its byte 0, byte 1, byte 2 and byte 3 locate at the same column as byte 4, byte 5, byte 6 and byte 7 respectively. For example, A0 locates at row 0 column 0, A4 locates at row 3 column 0, their column addresses overlap, so it is impossible to write the whole 8 bytes in one clock.

Table 9 represents the recovered VCG data block with revised position. Now after the address collision is solved, the whole 8 bytes can be written in one clock. It can be seen from the table, that from row 0 to row 2, all bytes are at their true positions, from row 3 to row 5, all bytes are shift one column right from their true positions, which is in accordance with the illustrations in the above texts. When these bytes are read out, they are just shifted one column left to get the correct order.

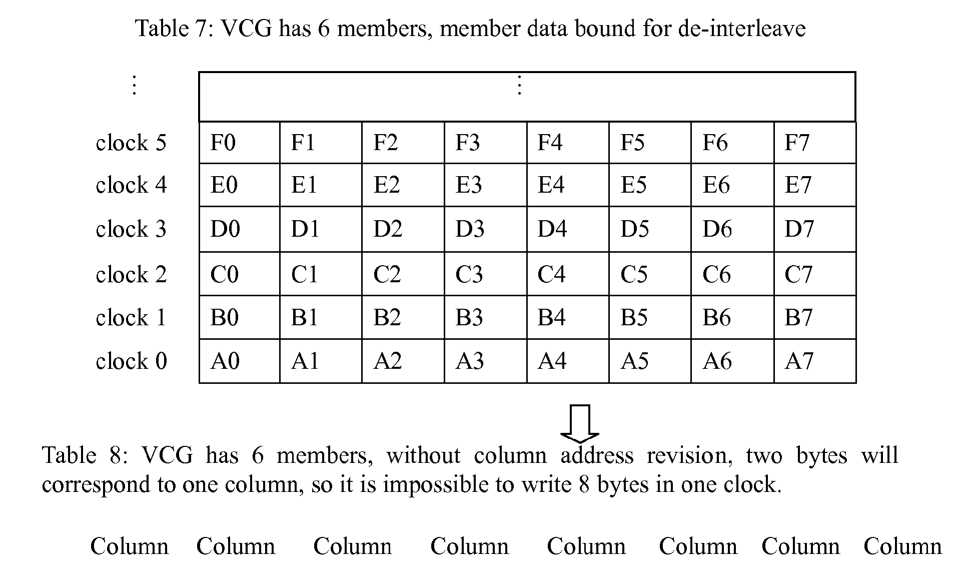

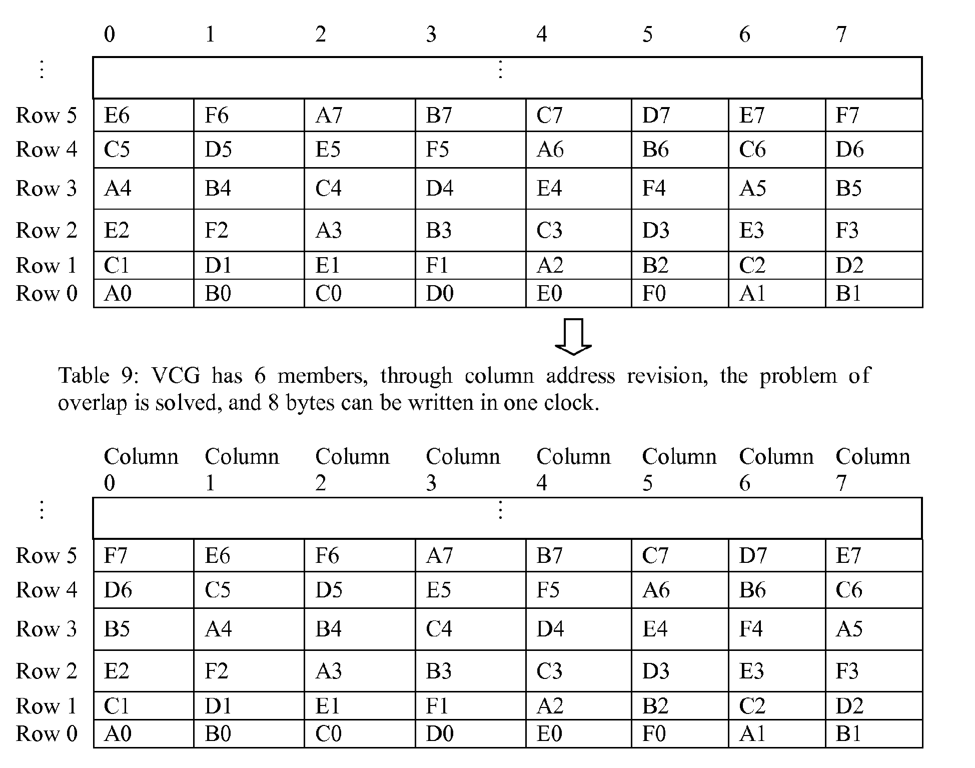

### Egress

In the Ingress, the byte address in the recovered VCG data block is divided into row address and column address, and in this way de-interleave is implemented. Now it comes to the problem that whether this method can be used for Egress, that is, the byte address in the SDH frame is also divided into row address and column address to implement interleave.

This can not work directly. 10G SDH consists of 64VC4s, while depending on different bandwidth requirements, a VCG can consist of any number VC4s upper bounded by 64, and further these VC4s can be in any sequence. For example, assuming a VCG has five members, VC4#3, VC4#7, Vac4#11, VC4#33 and VC4#50, they may be in the sequence of VC4#3, VC4#7, Vac4#11, VC4#33 and VC4#50, or in the sequence of VC4#7, VC4#3, Vac4#11, VC4#33 and VC4#50, or in the sequence of Vac4#11, VC4#7, VC4#33, VC4#3 and VC4#50 .... There are too many cases for it to be as regular as in ingress. This is why it cannot work directly.

Egress interleave consists of two steps: member aggregation and interleave. Data from a VCG are first member-aggregated and are written into the member aggregation memory, then post-aggregation data in the member aggregation memory is read out for an interleaving operation and then iswritten into the interleave memory. The result of member aggregation is that 8 bytes belonging to the same member are arranged in the same row, this is the reverse of the second-stage de-interleave. After member aggregation, it is amazing that the interleave becomes a de-interleave with the member number N equals to 64, so the method used in Ingress de-interleave can be used.

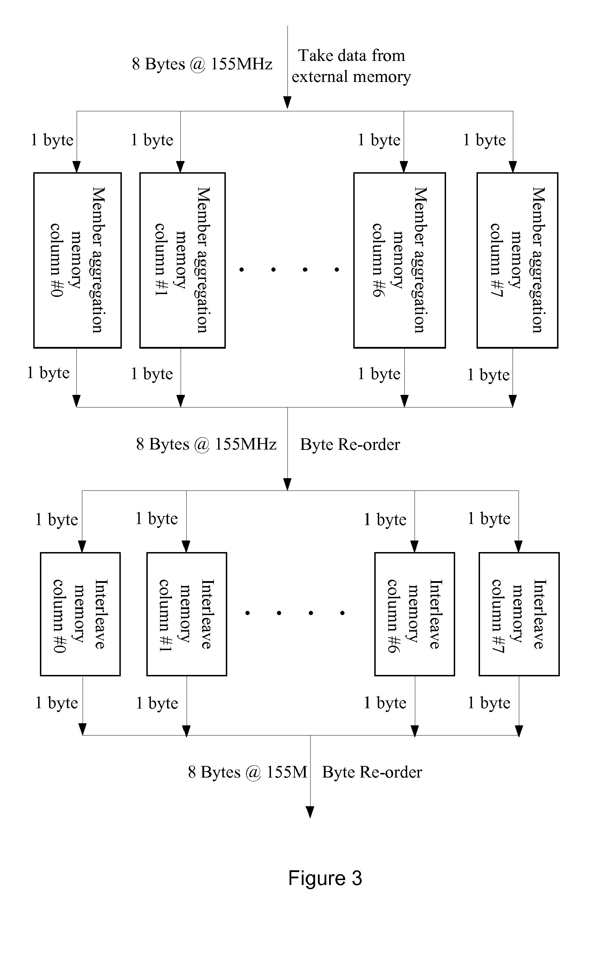

Figure 3 below represents the interleave text block located between ② and ③ in egress path in Figure 1. As in the ingress, the member aggregation memory and interleave memory are both consist of 8 memory columns, each column having a write port and a read port, and the port width being one byte. During write, the column address determines into which memory column this byte is written and the row address determines into which location of this memory column this byte is written. During read, the column address determines from which memory column the byte will be read and the row address determines from which location of this memory column the byte will be read.

### VCG member aggregation

Assuming VCG member number is N.

For byte 0 to byte 7 of the first 8 bytes (refer to table 4, it is at clock 0), their row and column address pairs are denoted as (R0,C0), (R1,C1), (R2,C2), (R3,C3), (R4,C4), (R5,C5), (R6,C6), (R7,C7) , where R stands for row and C stands for column. Row address and column address are created as the following:

| | |
|---|---|
| R0=0; | C0=0; |
| R1=RO+1; | C1=C0+1=1; |
| R2=R0+2=R1+1; | C2=C0+2=C1+1=2; |
| R3=R0+3=R2+1; | C3=C0+3=C2+1=3; |
| R4=R0+4=R3+1; | C4=C0+4=C3+1=4; |
| R5=R0+5=R4+1; | CS=CO+5=C4+1=5; |
| R6=RO+6=RS+1; | C6=C0+6=C5+1=6; |
| R7=R0+7=R6+1; | C7=C0+7=C6+1=7; |

For the subsequent 8 bytes (refer to table 4, it is at clock 2, clock 3...), their address pairs are obtained by the address pairs of the current 8 bytes added by 8, respectively. The row address will be modulo N and the column address will be modulo 8. Modulo operation is hidden in the addition above. This results in that the 8 bytes data are written into 8 aggregation memory columns in a way similar to the "Z" shape as shown in table 12.

Take the second 8 bytes as an example, their address pairs are the first 8 bytes' address pairs plus 8 respectively: ((R0+8)%N, (C0+8)%8), ((R1+8)%N, (C1+8)%8), ((R2+8)%N, (C2+8)%8), ((R3+8)%N, (C3+8)%8), ((R4+8)%N, (C4+8)%8), ((R5+8)%N, (C5+8)%8), ((R6+8)%N, (C6+8)%8) and ((R7+8)%N, (C7+8)%8). Because column address is modulo 8, it will keep unchanged, and the address pairs can be reduced to ((R0+8)%N, C0), ((R1+8)%N, C1), ((R2+8)%N, C2), ((R3+8)%N, C3), ((R4+8)%N, C4), ((R5+8)%N, C5), ((R6+8)%N, C6) and ((R7+8)%N, C7).

From another viewpoint, the address pair can be considered to be just the addition of (R0, C0) with byte numbering. For example, the address pair is (R0+6, C0+6) for 6th byte in VCG data block and the address pair is (R0+17, CO+17) for 17th byte, where modulo operation is hidden for simplicity.

As to column addresses, they are 0, 1, 2, 3, 4, 5, 6, 7, and keep unchanged, so 8 bytes of VCG data can be written in one clock.

As to the row address, refer to table 4, where N is 6. The bytes of every N belong to the same member. The row address is modulo N, so 8 bytes belonging to the same member will be arranged in a row after member aggregation. Further, when a byte returns its row, N times of adding 1 are performed, so the 8 column addresses of Mth member are M%8, (M+N)%8, (M+2*N)%8, (M+3*N)%8, (M+4*N)%8, (M+5*N)%8, (M+6*N)%8 and (M+7*N)%8, respectively. This means that the 8 bytes of a member do not arrange in the sequence of byte 0 to byte 7 in the row, so a byte reorder should be performed to get the correct order during read. Because of modulo 8, as in the ingress, when N is odd, these 8 column addresses do not overlap, when N is even, they overlap. This means that the subsequent data will override the previous ones. It needs to be noted here that it is the overlap of the column addresses of the 8 bytes of the member, but not the overlap of the column addresses of the 8 bytes from the VCG data block, that results in the data override, as described previously, the column addresses of the 8 bytes from the VCG data block are 0, 1, 2, 3, 4, 5, 6, and 7 and keep unchanged. Column address revision is adopted to avoid data override. Column address revision and byte reorder are depicted below in detail.

### Column address revision and byte reorder

The overlap of the column addresses of the 8 bytes of the member and the revision are as shown in table 12, which are the same as in the ingress.

**Table 10: when N is even, the column addresses of the 8 bytes of the member overlap, resulting in data override.**

| **N[2:0]** | | **Byte 0** | **Byte 1** | **Byte 2** | **Byte 3** | **Byte 4** | **Byte 5** | **Byte 6** | **Byte 7** |
|---|---|---|---|---|---|---|---|---|---|
| **"000" Overlap 7times** | **original** | **a** | **a** | **a** | **a** | **a** | **a** | **a** | **a** |
| | **revision** | **a** | ***a*+*1*** | ***a*+*2*** | ***a*+*3*** | ***a*+*4*** | ***a*+*5*** | ***a*+*6*** | ***a*+*7*** |
| **"010" Overlap 1 time** | **original** | **a** | **b** | **c** | **d** | **a** | **b** | **c** | **d** |
| | **revision** | **a** | **b** | **c** | **d** | ***a*+*1*** | ***b*+*1*** | ***c*+*1*** | ***d*+*1*** |
| **"100" Overlap 3 times** | **original** | **a** | **b** | **a** | **b** | **a** | **b** | **a** | **b** |
| | **revision** | **a** | **b** | ***a*+*1*** | ***b*+*1*** | ***a*+*2*** | ***b*+*2*** | ***a*+*3*** | ***b*+*3*** |
| **"110"** | **original** | **a** | **b** | **c** | **d** | **a** | **b** | **c** | **d** |
| **Overlap 1 time** | **revision** | **a** | **b** | **c** | **d** | ***a*+*1*** | ***b*+*1*** | ***c*+*1*** | ***d*+*1*** |

The column addresses of the 8 bytes of the VCG data block start with 0, 1, 2, 3, 4, 5, 6 and 7, when N is odd, they will keep unchanged.

When n is even, the column addresses of the 8 bytes of the member need to be revised according to the above table 10, and this is achieved by revising the column addresses of the 8 bytes of the VCG data block in the following ways:

When N[2:0] is "000", the column addresses of all 8 bytes from the VCG data block and between clock 0 and clock N/8-1 are kept at 0, 1, 2, 3, 4, 5, 6 and 7; the ones between clock N/8 and clock 2*N/8-1 are revised to be original column address plus 1, i.e. being changed to 1, 2, 3, 4, 5, 6, 7 and 0, ...; and the ones between clock 7*N/8 and clock N-1 are revised to be original column address plus 7, i.e. being change to 7, 0, 1, 2, 3, 4, 5 and 6. There should be 7 times of column address revision in total, corresponding to the 7 times of column address revision of the members in table 10.

When N[2:0] is "010" and "110", the column addresses of all 8 bytes from the VCG data block and between clock 0 and clock N/2-1 are kept at 0, 1, 2, 3, 4, 5, 6 and 7; the ones between clock N/4 and clock N-1 are revised to original plus 1, i.e. being change to 1, 2, 3, 4, 5, 6, 7 and 0. There should be 1 time column address revision in total, corresponding to the 1 time column address revision of the members in table 10.

When N[2:0] is "100", the column addresses of all 8 bytes from the VCG data block and between clock 0 and clock N/4-lare kept at 0, 1, 2, 3, 4, 5, 6 and 7; the ones between clock N/4 and clock 2*N/4-1 are revised to original plus 1, i.e. being change to 1, 2, 3, 4, 5, 6, 7 and 0; the ones between clock 2*N/4 and clock 3*N/4-1 are revised to original plus 2, i.e. being change to 2, 3, 4, 5, 6, 7, 0 and 1; and the ones between clock 3*N/4 and clock N-1 are revised to original plus 3, i.e. being change to 3, 4, 5, 6, 7, 0, 1 and 2. There should be 3 times of column address revision in total, corresponding to the 3 times of column address revision of the members in table 10.

During member aggregation, when N is odd, byte 0 to byte 7 of Mth member are distributed to columns M%8, (M+N)%8, (M+2*N)%8, (M+3*N)%8, (M+4*N)%8, (M+5*N)%8, (M+6*N)%8 and (M+7*N)%8, respectively. When N is even, the distribution is revised as in table 10. So during read, the column addresses are generated in this way to get 8 bytes exported in the correct order. This is the byte reorder method.

Examples for column address revision and byte reorder:

Take N = 6 as an example. VCG has 6 members, for simplicity, they are assumed to be A, B, C, D, E and F in sequence as in table 11.

As shown in table 12, VCG data are written into the member aggregation memory in a way of "Z" shape, the column addresses are not revised, and there are such column collisions as that byte 0 to byte 3 are overridden by byte 4 to byte 7 respectively. For example, A0 to A3 are overridden by A4 to A7 respectively.

As shown in table 13, the column addresses are revised, this time no data override occurs. After aggregation, 8 bytes belonging to the same member appear in the same row, however they are not arranged in the order of byte 0 to byte 7. Byte 0 to byte 7 of Mth member are distributed to columns M%8, (M+N)%8, (M+2*N)%8, (M+3*N)%8, (M+1)%8, (M+N+1)%8, (M+2*N+1)%8 and (M+3*N+1)%8, respectively.

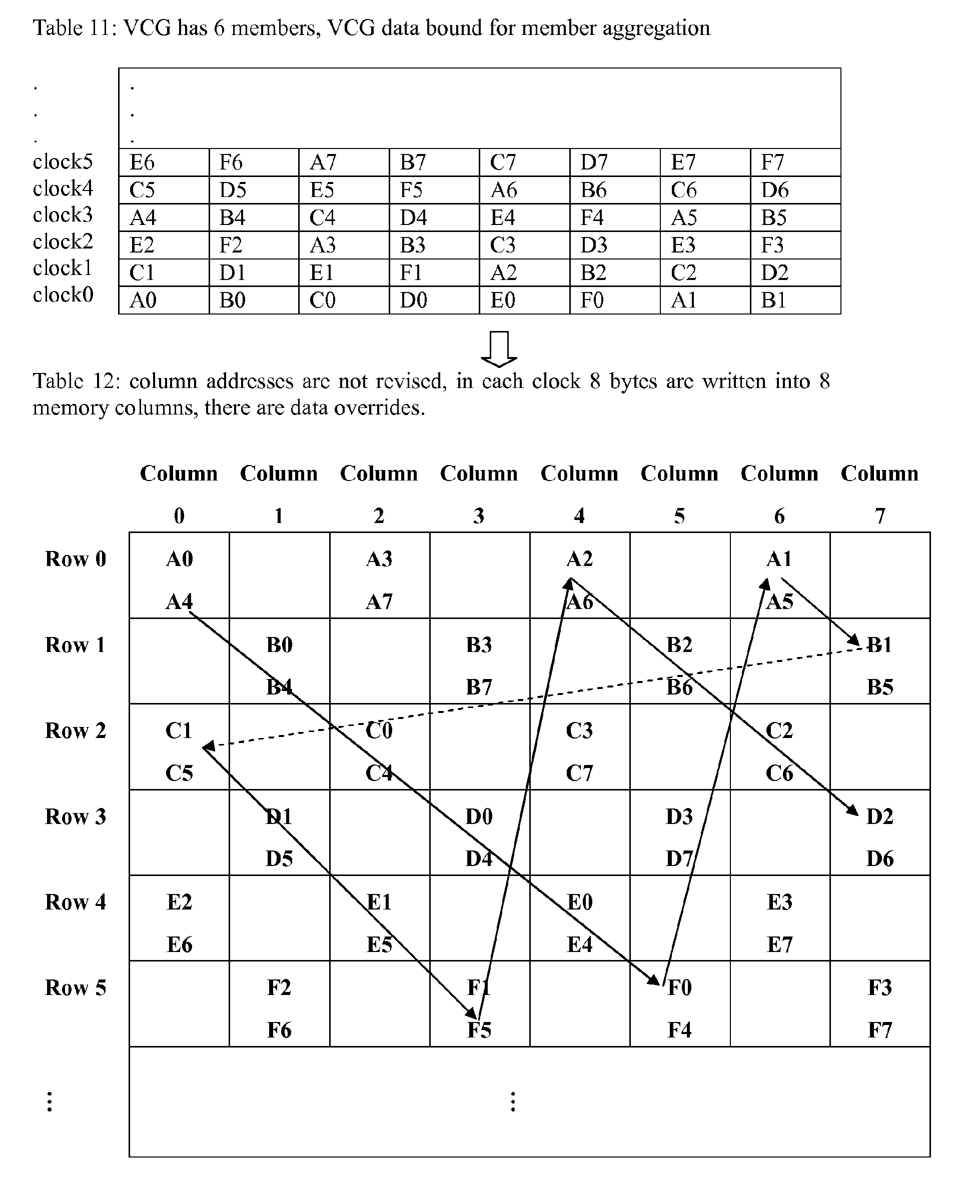

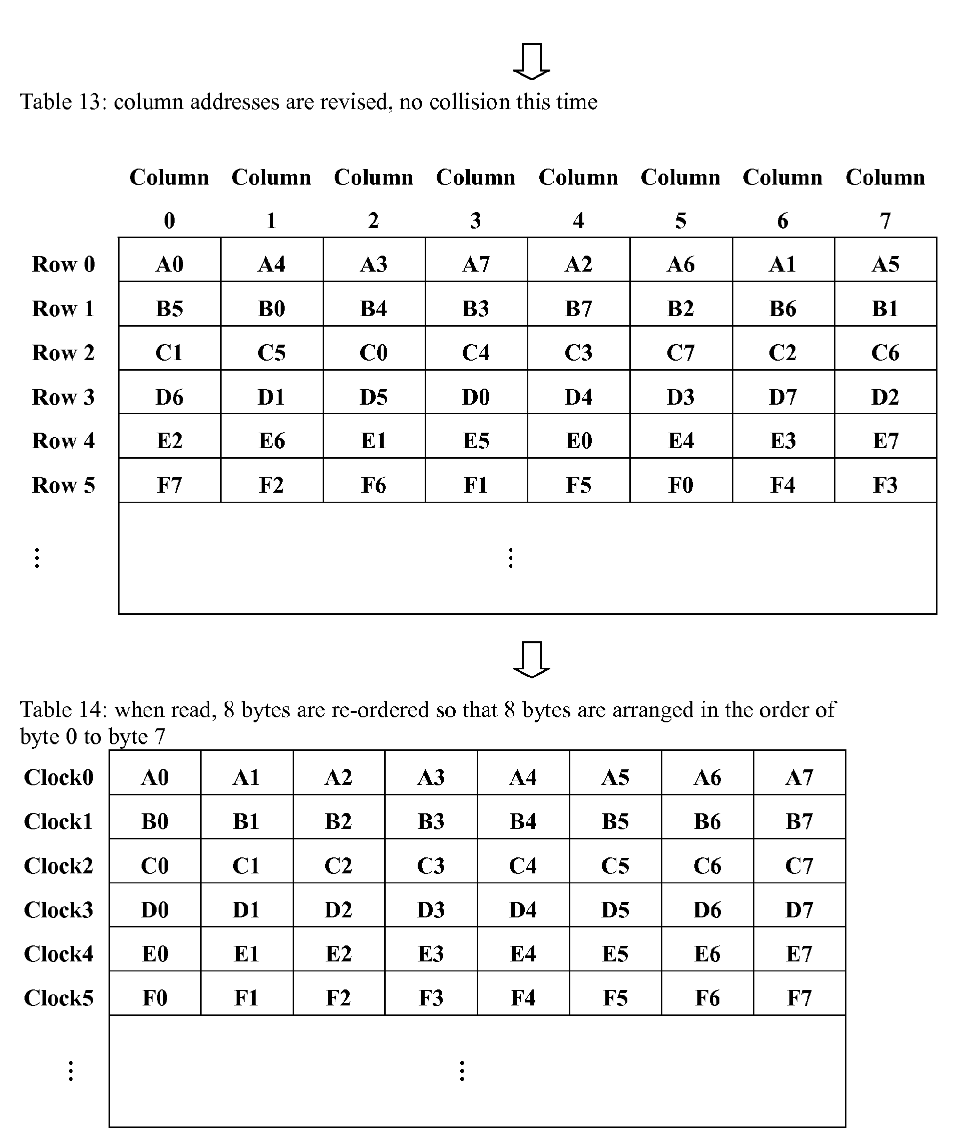

As shown in table 14, during read, the column addresses are generated as M%8, (M+N)%8, (M+2*N)%8, (M+3*N)%8, (M+1)%8, (M+N+1)%8, (M+2*N+1)%8 and (M+3*N+1)%8 to get data out in the order of byte 0 to byte 7.

### Interleave

After member aggregation, interleave can be regarded as a particular case of the second-stage de-interleave with 64 members. The difference is that, in de-interleave, data from 64 members are centralized processed one time(since the 64 members belong to the same one VCG and data from one VCG are processed each time in de-interleave);while in interleave, 64 members are distributed (VC4s) among a plurality of VCGs and each time data from one VCG are processed (so, several VC4s are processed each time, instead of processing 64 VC4s).

In summary, interleave and de-interleave are designed from the viewpoint of matrix, and row address and column address are generated. The row column address pair together with the solution to address collision solve the problem of how to distribute 8 bytes to their inconsecutive locations in just one clock so that a 10Gbps throughout is guaranteed.

The interleave and de-interleave method including modulo operation, address revision and byte reorder according to the present invention is very regular, so it is easy to implement.

The de-interleave memory should be big enough for VCG with 64 members to work in a ping-pong mode. The maximum of the member number is 64, so for each memory column there should be 2*64=128 bytes, i.e. 128 rows at least. Assuming that VCG member number is N, then the de-interleave processes N*8 bytes data each time for a recovery. Refer to tables 7, 8 and 9, where N is 6, 6*8 bytes are recovered after processing. Assuming that the row address starts with 0, then these data will occupy row 0 to row N-1. Subsequently de-interleave, if any, will process another N*8 bytes, and use row N to row 2N-1 as the storage space. At the same time, the recovered N*8 bytes will be read out for further processing. This process is repeated until the whole VCG data are recovered and then proceeds to the next VCG. When the row reaches 128, the process will move to the 0^{th} row. If N is 64, there are just two space blocks for switch, that is, the operation mode is a ping-pong mode.

Although de-interleave processes N*8 bytes data each time for a recovery, it does not mean that it can not work without N*8 bytes. For example, if there are only 6 bytes for every member and thus N*6 bytes in total, the member data are input using the low 6 bytes in the de-interleaved 8 bytes, without considering the two most significant bytes. Then after de-interleave, these N*6 bytes are arranged in row 0 to row N-3, row N-2 and N-1 are filled with data that are not considered. From another viewpoint, the de-interleave can distribute 8 bytes in one clock, so there is certainly no problem to distribute 6 bytes in one clock, just not using its capacity to the maximum.

### Write data into the de-interleave memory

The addresses of Mth member 8 bytes in the first N*8 bytes data block are M, M+N, M+2N, M+3N, M+4N, M+5N, M+6N and M+7N. Refer to tables 2 and 3, at clock 0, the addresses are 0, N, 2N, 3N, 4N, 5N, 6N and 7N, at clock 1, they are 1, N+1, 2N+1, 3N+1, 4N+1, 5N+1, 6N+1 and 7N+1. In general, they each plus 1 each subsequent clock. This means that the addresses start with an initial value and can be generated through recursion later. The low 3 bits of the addresses are column addresses and the high bits are row addresses.

From the viewpoint of the 8 bytes pending for de-interleave, each byte will select one of 8 memory columns to write. The initial values of the column address, when N is odd, are 0, N%8, 2N%8, 3N%8, 4N%8, 5N%8, 6N%8, 7N%8; and when N is even, the initial values of the column address will be revised on the basis of 0, N%8, 2N%8, 3N%8, 4N%8, 5N%8, 6N%8, 7N%8 according to table 6. There are four cases as follows: when N[2:0] is "000", the initial values of the column address are 0, 1, 2, 3, 4, 5, 6 and 7; when N[2:0] is "010", the initial values of the column address are 0, 2, 4, 6, 1, 3, 5 and 7; when N[2:0] is "100", the initial values of the column address are 0, 4, 1, 5, 2, 6, 3 and 7; and when N[2:0] is "110", the initial values of the column address are 0, 6, 4, 2, 1, 7, 5 and 3. The column addresses each will plus 1 each subsequent clock.

From the viewpoint of 8 memory columns, each memory column will select one of 8 bytes as its input data. It is easier to implement if the viewpoint is changed to memory columns. Byte index is defined here to select the byte, it is the counterpart of column address. For each memory column, there is a byte index. The byte index can be inferred from the column address. When N is odd, it is amazing that the initial values of the byte index are 0, N%8, 2N%8, 3N%8, 4N%8, 5N%8, 6N%8 and 7N%8, which are the same as the initial values of the column address. When N is even, there are four cases: when N[2:0] is "000", the initial values of the byte index are 0, 1, 2, 3, 4, 5, 6 and 7; when N[2:0] is "010", the initial values of the byte index are 0, 4, 1, 5, 2, 6, 3 and 7; when N[2:0] is "100", the initial values of the byte index are 0, 2, 4, 6, 1, 3, 5 and 7; and when N[2:0] is "110", the initial values of the byte index are 0, 4, 3, 7, 2, 6, 1 and 5. They each subtract 1 each subsequent clock. Byte index subtracted by 1 corresponds to column address added by 1 (column address shifts right, so byte index should shift left).

Since the implementation process of all memory columns are similar, only memory column 2 is used below to illustrate the implementation process. Byte index is generated first, and then it is used to select one of 8 bytes as its input byte and one of 8 row addresses as its row address.

Co12_Byte_Index, Col2_Byte and Col2_Row_Addr are the byte index, input data (output data when read) and row address of column 2, respectively. Byte2_Row_Addr and Byte2_Col_Addr are the row address and column address of byte 2, respectively.

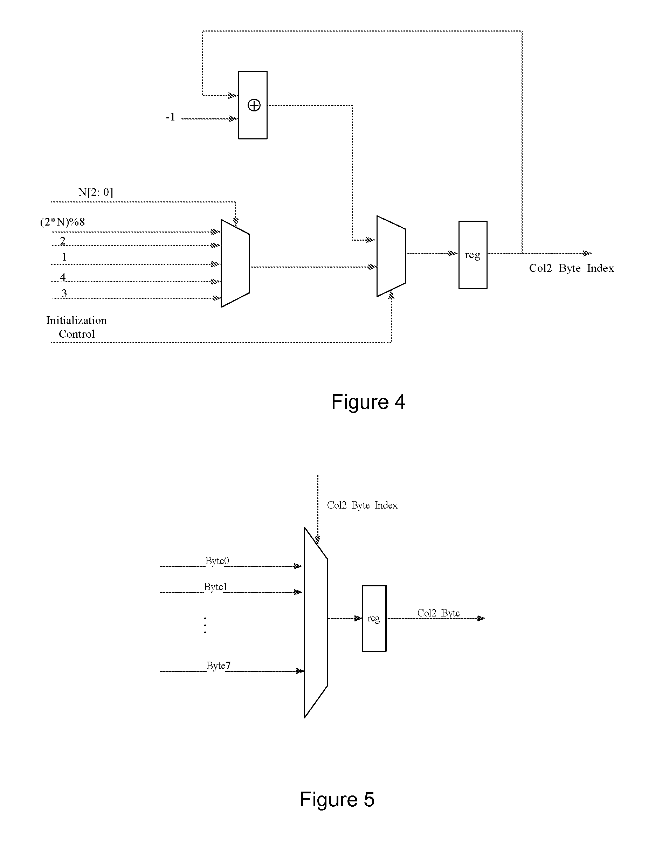

Figure 4 depicts the byte index generation of column 2. N[2:0] chooses the initial value. Initialization Control determines that Col2_Byte_Index starts with the initial value and will subtract 1 each subsequent clock.

Figure 5 depicts the generation of Col2_Byte, which is selected by Col2_Byte_Index from 8 bytes pending for de-interleave.

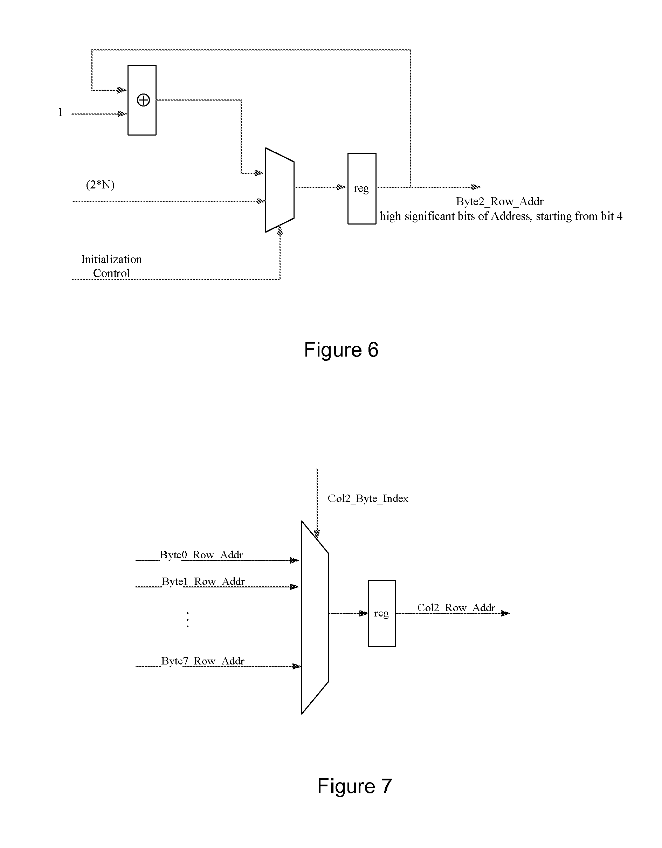

Figure 6 depicts the generation of Byte2_Row_Addr. The initial value of the address is 2*N, and plus 1 each subsequent clock. Byte2_Row_Addr is formed of the high significant bit of the address starting from bit 4.

Figure 7 depicts the generation of Col2_Row_Addr, which is selected by Col2_Byte_Index from 8 row addresses of bytes pending for de-interleave.

Read data from the de-interleave memory:

The row address starts with 0, plus 1 each row.

The initial values of the column addresses of byte 0 to byte 7 are 0 to 7. When N is odd, the column addresses of byte 0 to byte 7 keep to be the initial values; when N is even, there are four cases for the column addresses of byte 0 to byte 7 as described below:
When N[2:0] is "000", from row 0 to row N/8-1, the column addresses of byte 0 to byte 7 keep to be the initial values; from row N/8 to row 2*N/8-1, they each plus 1; from row 2*N/8 to 3*N/8-1, they each plus 1 again ...; and from row 7*N/8 to row N-1, they each plus 1 again.
When N[2:0] is "010"and "110", from row 0 to row N/2-1, the column addresses of byte 0 to byte 7 keep to be the initial values; from row N/2 to row N-1, they each plus 1.
When N[2:0] is "100", from row 0 to row N/4-1, the column addresses of byte 0 to byte 7 keep to be the initial values; from row N/4 to row 2*N/4-1, they each plus 1; from row 2*N/4 to row 3*N/4-1, they each plus 1 again; and from row 3*N/4 to row N-1, they each plus 1 again.
When a recovered data block is read out, the column address procedure above will be restarted.

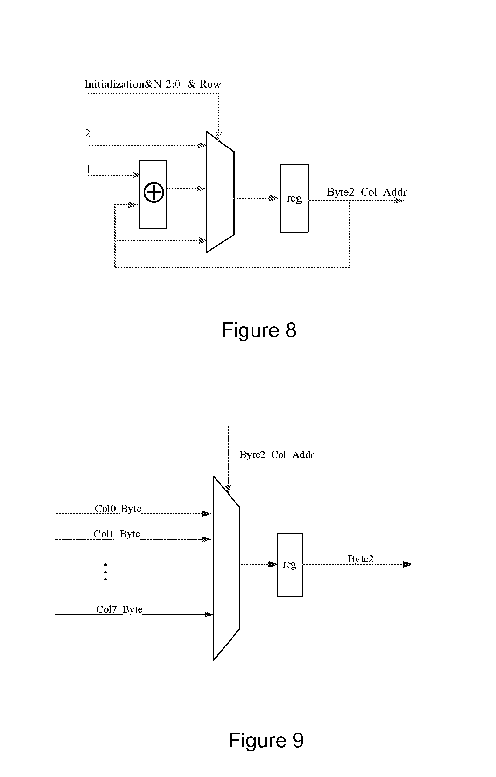

Figure 8 depicts the generation of Byte2_Col_Addr of byte 2. The initial value is 2. The initialization controls that it start with initial value, and N[2:0] together with the row number determine whether said Byte2_Col_Addr plus 1 or not.

Figure 9 depicts the generation of byte 2 at the read side. Said byte 2 is selected by Byte2_Col_Addr from 8 de-interleave memory column bytes.

### Egress

The same implementation concept as in the ingress applies, and the differences are depicted below.

Write data into the member aggregation memory

Addresses start with the initial value and are generated through recursion later.

The initial values of the byte indexes of memory column 0 to memory column 7 are 0, 1, 2, 3, 4, 5, 6 and 7. When N is odd, the byte indexes of the memory columns keep the initial values, when N is even, there are four cases:
When N[2:0] is "000", from row 0 to row N/8-1, the byte indexes of the memory columns keep the initial values; from row N/8 to row 2*N/8-1, they each subtract 1; from row 2*N/8 to 3*N/8-1, they each subtract 1 again ...; from row 7*N/8 to row N-1, they each subtract 1 again.
When N[2:0] is "010"and "110", from row 0 to row N/2-1, the byte indexes of the memory columns keep the initial values; from row N/2 to row N-1, they each subtract 1.
When N[2:0] is "100", from row 0 to row N/4-1 the byte indexes of the memory columns keep the initial values; from row N/4 to row 2*N/4-1, they each subtract 1; from row 2*N/4 to row 3*N/4-1, they each subtract 1 again; from row 3*N/4 to row N-1, they each subtract 1 again.

The row address is modulo N. Since the subsequent row addresses are the previous ones plus 8, it can be simplified as follows:

All cases of row address initial values of byte 0 to byte 7 are listed as the following:
When N is 1, the row address initial values of byte 0 to byte 7 are 0 , 0 , 0 , 0 , 0 , 0 , 0, 0;
When N is 2, the row address initial values of byte 0 to byte 7 are 0 , 1 , 0 , 1 , 0 , 1 , 0 , 1;
When N is 3, the row address initial values of byte 0 to byte 7 are 0 , 1 , 2 , 0 , 1 , 2 , 0 , 1;
When N is 4, the row address initial values of byte 0 to byte 7 are 0 , 1 , 2 , 3 , 0 , 1 ,2 , 3;
When N is 5, the row address initial values of byte 0 to byte 7 are 0 , 1 , 2 , 3 , 4 , 0 , 1 , 2;
When N is 6, the row address initial values of byte 0 to byte 7 are 0 , 1 , 2 , 3 , 4 , 5 , 0 , 1;
When N is 7, the row address initial values of byte 0 to byte 7 are 0 , 1 , 2 , 3 , 4 , 5 , 6 , 0;
When N is greater than 7, the row address initial values of byte 0 to byte 7 are 0 ,1 ,2 , 3 , 4 , 5 , 6 , 7;

The subsequent row addresses are:
When N is 1, they keep to be 0 , 0 , 0 , 0 , 0 , 0 , 0 , 0;
When N is 2, they keep to be 0 , 1 , 0 , 1 , 0 , 1 , 0 , 1;
When N is greater than 2, they are respectively
   the first non-negative of (R0 + 8 - 2*N ), (R0 + 8 - N) and (R0 + 8),
   the first non-negative of (R1 + 8 - 2*N), (R1 + 8 - N) and (R1 + 8),
   ,.....,
   the first non-negative of (R6 + 8 - 2*N), (R6 + 8 - N) and (R6 + 8),
   the first non-negative of (R7 + 8 - 2*N), (R7 + 8 - N) and (R7 + 8).
Where R# is the current row address, # is from 0 to 7.

Read data from the member aggregation memory

The row address starts with 0, plus 1 each row.

When N is odd, the initial column addresses are 0, N%8, 2N%8, 3N%8, 4N%8, 5N%8, 6N%8, 7N%8;when N is even, there are four cases: if N[2:0] is "000", the initial column addresses are 0, 1, 2, 3, 4, 5, 6, 7; if N[2:0] is "010", they are 0, 2, 4, 6, 1, 3, 5, 7; if N[2:0] is "100", they are 0, 4, 1, 5, 2, 6, 3, 7; if N[2:0] is "110", they are 0, 6, 4, 2, 1, 7, 5, 3. Each of the column addresses plus 1 each row. When an aggregated data block is read out, the procedure above will be restarted.

### Write data into the interleave memory

The initial value and recursion can not be used here, but the addresses are calculated from the member sequence number directly. The byte indexes of column 0 to column 7 are (8-M[2:0]+0)%8, (8-M[2:0]+1)%8, (8-M[2:0]+2)%8, (8-M[2:0]+3)%8, (8-M[2:0]+4)%8, (8-M[2:0]+5)%8, (8-M[2:0]+6)%8 and (8-M[2:0]+7)%8, respectively, where M is the member sequence number in 64 VC4s.

### Read data from the interleave memory

The row address starts with 0, plus 1 each row until all data are read out.

The initial column addresses for byte 0 to byte 7 are 0, 1, 2, 3, 4, 5, 6 and 7, each of the column addresses plus 1 every 8 rows until all data are read out.

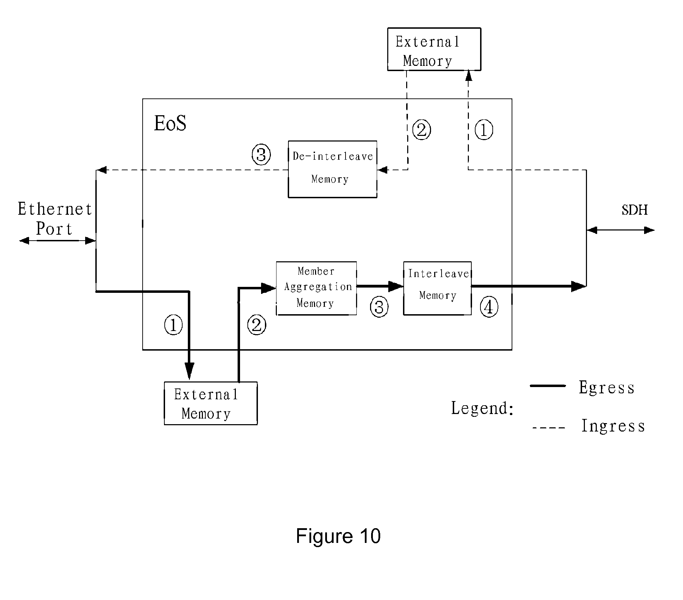

Figure 10 shows the hardware block diagram and the data flow of the embodiment according to the present invention.

The dashed lines represent the Ingress data flow:
run the first-stage de-interleave on SDH data to separate the members of each VCG from each other and store them into an external memory.
read each member of a VCG in sequence from the external memory, run the second-stage de-interleave to recover the VCG. Data are stored into the de-interleave memory.
Read the de-interleaved data from the de-interleave memory, and send them to corresponding Ethernet port after necessary processing.

### The bold solid lines represent the egress data flow:

The Ethernet data of 64 VCGs are stored into the external memory waiting to be interleaved.

Take each VCG's data from the external memory in sequence, run the member aggregation operation and store data into the member aggregation memory.

Run interleave and store data into interleave memory.

Read the interleaved data from the interleave memory, then send them to SDH after further necessary processing.

The present invention is an algorithm which is implemented internally in a chip, it can not be judged whether it can be used or not from product features or external interface behavior directly. However it can be judged indirectly to some degree. Bandwidth is the product of frequency and data width, if the clock frequency approximates 155 MHz, it is possible to use the same method. If the clock frequency is more than double of 155 MHz, the method cannot be used.

EOS chip designers will benefit from the use of the invention. The chip die can be reduced much in size and can be designed to have many powerful and flexible features, for example, the SDH tributary units can be freely mapped to VCG members in any sequence. And it is easy to expand to a capacity of 20G or more by using the present invention.

Although the invention has been described in conjunction with specific embodiments, these specific embodiments illustrate rather than limit the invention. It is evident that many alternatives, modifications and variations will be apparent to those skilled in the art in light of the foregoing description. Accordingly, it is intended to embrace all such alternatives, modifications and variations as fall within the spirit and scope of the appended claims.

## Claims

1. A high speed interleave method for use in EOS, the method comprises the steps of:
reading in sequence from the external memory the VCG data that are from the Ethernet and are waiting to be interleaved;
performing a member aggregation operation for each VCG data that has been read, and storing the member-aggregated VCG data into the member aggregation memory;
performing an interleave on the VCG data from the member aggregation memory, and
storing the interleaved VCG data into the interleave memory; and
forming a SDH frame to be sent to the SDH after all the VCG data have been interleaved.

2. The high speed interleave method according to claim 1, wherein the address of each byte in the SDH frame is divided into a column address and a row address, the low 3 bits are column addresses, and the high bits are row addresses, the column address determines into which memory column this byte is written and the row address determines into which location of the selected memory column this byte is written; when the number of the members of the VCG is odd, the column addresses of the bytes are not overlapped with each other, when the number of the members of the VCG is even, the column addresses of the bytes are overlapped.

3. The high speed interleave method according to claim 2, wherein the VCG data are aggregated according to the members thereof, and when the column addresses of the bytes are overlapped, the column addresses or the indexes of the bytes are revised so as to make the 8 bytes belonging to the same member to be arranged in the same row.

4. The high speed interleave method according to claim 3, wherein the revision of the column addresses or the indexes of the bytes is performed by shifting the column address right or by shifting the byte index left according to the times of overlapping of addresses.

5. A high speed interleave apparatus for use in EOS, the apparatus comprises:
a member aggregation memory for storing the VCG data that are aggregated according to the members, and
an interleave memory that is coupled to the downstream of the member aggregation memory and is used for storing the VCG data obtained by interleaving the VCG data read from the member aggregation memory,
wherein both the member aggregation memory and the interleave memory consist of 8 memory columns, each having a write port and a read port.

6. A high speed de-interleave method for use in EOS, the method comprises:
performing a first-stage de-interleave for the SDH frame to separate the members of each VCG from each other and to store the separated members into the external memory;
reading each of the members of the VCG in sequence from the external memory, performing a second-stage de-interleave to recover the VCG, and storing the recovered VCG data into a de-interleave memory so as to be sent to the Ethernet port.

7. The high speed de-interleave method according to claim 6, wherein the address of each of the 8 bytes pending for interleave is divided into a column address and a row address, the low 3 bits are column addresses, and the high bits are row addresses, the column address determines into which memory column this byte is written and the row address determines into which location of the selected memory column this byte is written; when the number of the members of the VCG is odd, the column addresses of the bytes are not overlapped with each other, when the number of the members of the VCG is even, the column addresses of the bytes are overlapped.

8. The high speed de-interleave method according to claim 6 or 7, wherein the first-stage de-interleave is used for member alignment.

9. The high speed de-interleave method according to claim 6 or 7, wherein in the case where the column addresses overlap, the second-stage de-interleave revises the column addresses or the indexes of the bytes to make only one byte correspond to one memory column.

10. A high speed de-interleave apparatus for use in EOS, the apparatus comprises: a de-interleave memory for storing the recovered VCG data, the de-interleave memory consists of 8 memory columns, each memory column having a write port and a read port.
